# EUROPEAN PATENT APPLICATION

(11) **EP 3 045 288 A1**
(43) Date of publication of application: **20.07.2016**
(21) Application number: 14844530.7
(22) Date of filing: 22.08.2014
(51) Int. Cl.: B29C 45/14, B29C 33/12, B29K 101/10, B29K 105/22

(54) **MOLDING MANUFACTURING METHOD AND INTEGRATED METAL RESIN MOLDING**

(30) Priority: 11.09.2013 JP 2013188492
(71) Applicant: Sumitomo Bakelite Company Limited, Shinagawa-ku Tokyo 140-0002 (JP)
(72) Inventor: OKASAKA Shu, Tokyo 140-0002 (JP); KOIZUMI Koji, Tokyo 140-0002 (JP); TAKIHANA Yoshihiro, Tokyo 140-0002 (JP)
(74) Representative: Ter Meer Steinmeister & Partner
(86) International application number: PCT/JP2014/072005
(87) International publication number: WO 2015/037415

(57) **Abstract**

A method for manufacturing a molded article obtained by integrating a plate-shaped or sheet-shaped metal member (100) and a resin member, includes a step of putting the metal member (100) in a molding space (10) by using a molding mold (3) which includes a first mold portion (1) and a second mold portion (2) and has the molding space (10) formed of these mold members; a step of introducing a resin material (50) including a thermosetting resin into the molding space (10) in the molding mold (3) and filling the resin material (50) into the molding space (10) while pressing the metal member (100) onto any one molding surface of the first mold portion (1) and the second mold portion (2) by a fluid pressure of the resin material (50); and a step of curing the introduced resin material (50) so as to obtain the molded article.

## Description

### TECHNICAL FIELD

The present invention relates to a method for manufacturing a molded article and an integrally molded metal-resin article.

### BACKGROUND ART

Recently, due to the trend of replacing metals for weight reduction or efficiency improvement, component materials have been actively switched from metals to resins and, in a variety of industrial fields, use of resins for mechanism components, structural members, and the like is being accelerated. However, in a case in which a component or a member is formed by using only a resin material, there are cases in which it is difficult to obtain sufficient performance in terms of stiffness, strength, thermal conductivity, and the like. Therefore, a composite material having advantages of both a metal and a resin obtained by integrally molding a metal and a resin is used.

As a technique for manufacturing a composite material by integrally molding a metal and a resin as described above, insert molding is widely used. The insert molding refers to a molding method in which a resin is introduced into a molding space in a mold in a state that metal components are installed in advance in the molding space in the mold and the resin and the metal are integrated.

As resins used in the insert molding, both a thermoplastic resin and a thermosetting resin are used. Patent Document 1 describes an example in which a thermoplastic resin is used. Patent Document 2 describes an example in which a thermosetting resin is used.

### RELATED DOCUMENT

### PATENT DOCUMENT

[Patent Document 1] Japanese Laid-open Patent Publication No. 2011-166124
[Patent Document 2] Japanese Laid-open Patent Publication No. 2006-272657

### SUMMARY OF THE INVENTION

However, in a case in which a resin material is introduced into a mold in a state that a metal member is fixed in the mold as in the methods described in Patent Documents 1 and 2, there has been a disadvantage in that burrs are generated due to an infiltrating of the resin through a gap between the metal member and the mold or insertion margins.

The present invention has been made in consideration of the above-described circumstance and provides a method for manufacturing a molded article in order to obtain an integrally molded metal-resin article having favorable qualities in which generation of burrs can be suppressed.

The present inventors repeated intensive studies in order to achieve the above-described object and consequently found that generation of burrs can be suppressed by introducing a molten resin material into a mold in a state that a metal member is put in the mold without being fixed.

That is, according to the present invention, there is provided a method for manufacturing a molded article obtained by integrating a plate-shaped or sheet-shaped metal member and a resin member, including: a step of putting the metal member in a molding space by using a molding mold which includes a first mold portion and a second mold portion and has the molding space formed of these mold members; a step of introducing a resin material including a thermosetting resin into the molding space in the molding mold and filling the resin material into the molding space while pressing the metal member onto any one molding surface of the first mold portion and the second mold portion by a fluid pressure of the resin material; and a step of curing the introduced resin material so as to obtain the molded article.

Furthermore, according to the present invention, there is provided an integrally molded metal-resin article obtained using the method for manufacturing a molded article.

According to the present invention, it is possible to provide a method for manufacturing a molded article in order to obtain an integrally molded metal-resin article having favorable qualities in which generation of burrs can be suppressed.

### BRIEF DESCRIPTION OF THE DRAWINGS

The above-described object, other objects, characteristics, and advantages will be further clarified by using a preferred embodiment described below and the accompanying drawings below.

FIG. 1 shows diagrams for describing an example of a method for manufacturing a molded article according to the present embodiment.
FIG. 2 is a diagram for describing an example of the method for manufacturing a molded article according to the present embodiment.
FIG. 3 is a diagram for describing an example of the method for manufacturing a molded article according to the present embodiment.
FIG. 4 is a diagram for describing a modification example of the method for manufacturing a molded article according to the present embodiment.

### DESCRIPTION OF EMBODIMENTS

Hereinafter, the present embodiment will be described by using the drawings. In all the drawings, identical components will be given an identical reference number and will not be repeated.

### <Method for manufacturing molded article>

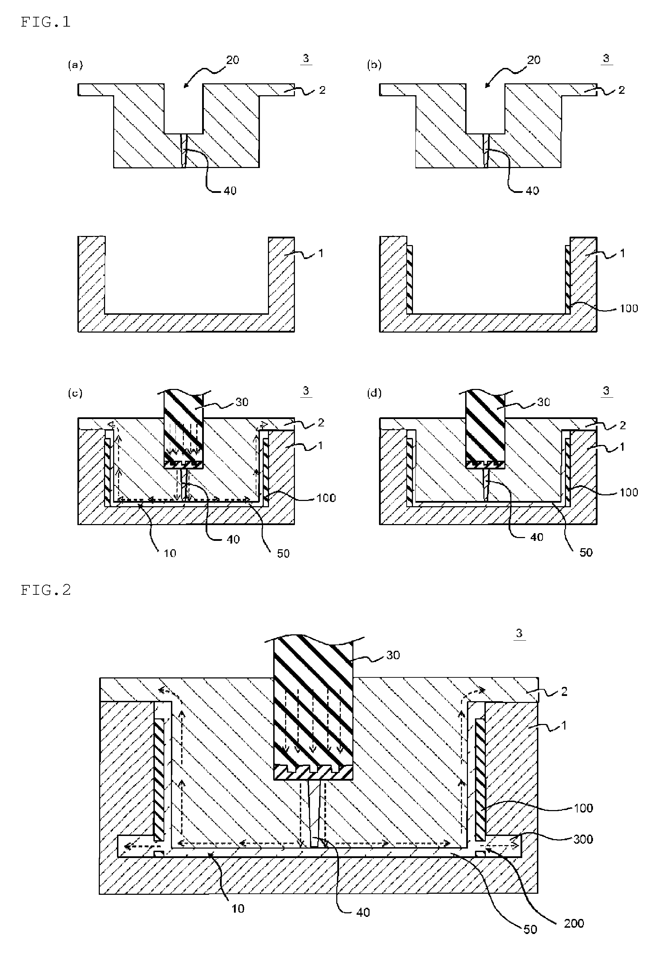

FIG. 1 shows diagrams for describing an example of a method for manufacturing a molded article according to the present embodiment. Meanwhile, the manufacturing method according to the present embodiment relates to a method for manufacturing a molded article obtained by integrating a plate-shaped or sheet-shaped metal member 100 and a resin member (hereinafter, also referred to as the "integrally molded metal-resin article"). In the manufacturing method according to the present embodiment, a molding mold 3 which includes a first mold portion 1 and a second mold portion 2 and has a molding space 10 formed of these mold members (the first mold portion 1 and the second mold portion 2) is used. Here, the first mold portion 1 and the second mold portion 2 all refer to a portion of the molding mold 3 and may also include a core or a slide core.

As shown in FIG. 1, the method for manufacturing a molded article according to the present embodiment includes a step of putting the plate-shaped or sheet-shaped metal member 100 in the molding space 10 of the molding mold 3, a step of introducing a resin material 50 including a thermosetting resin into the molding space 10 in the molding mold 3 and filling the resin material 50 into the molding space 10 while pressing the metal member 100 onto any one molding surface of the first mold portion 1 and the second mold portion 2 by a fluid pressure of the resin material 50, and a step of curing the introduced resin material 50 so as to obtain the molded article. According to this manufacturing method, it is possible to obtain an integrally molded metal-resin article having favorable qualities in which generation of burrs is suppressed.

Hereinafter, the method for manufacturing a molded article according to the present embodiment will be described in detail using a case in which a transfer molding mold is used as the molding mold 3. Meanwhile, in the method for manufacturing a molded article according to the present embodiment, as the molding mold 3, a transfer molding mold may be used, an injection molding mold may be used, or a compression molding mold may be used. Meanwhile, even in a case in which an injection molding mold or a compression molding mold is used, the same effects are exhibited as in a case in which a transfer molding mold is used.

In the present embodiment, from the viewpoint of increasing the controllability of the dimensional accuracy of the molded article, a transfer molding mold is used.

As described above, FIG. 1 shows diagrams for describing an example of the method for manufacturing a molded article according to the present embodiment. Here, in FIG. 1, (a) is a diagram showing the structure of the molding mold before the metal member 100 is put, (b) is a diagram for describing the step of putting the metal member 100, (c) is a diagram for describing the step of filling the resin material 50 into the molding space 10, and (d) is a diagram for describing the step of curing the resin material 50 so as to obtain a molded article.

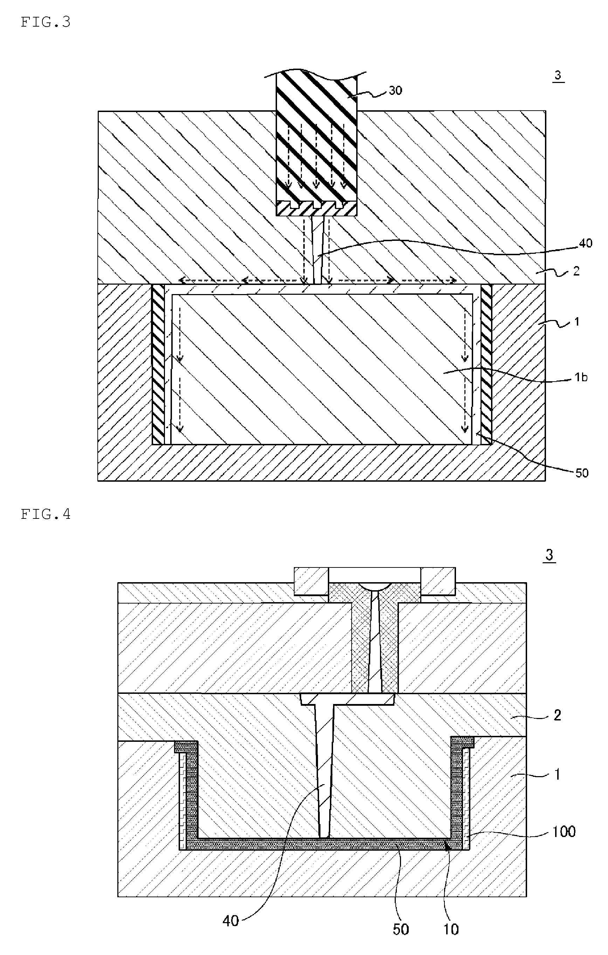

In addition, FIGS. 2 and 3 are both diagrams for describing examples of the method for manufacturing a molded article according to the present embodiment and diagrams showing other aspects of FIG. 1(c).

First, the molding mold 3 shown in FIG. 1(a) is prepared. The molding mold 3 according to the present embodiment includes the second mold portion 2 and the first mold portion 1. When the second mold portion 2 and the first mold portion 1 are combined together, the molding space 10 in which the metal member 100 is put in a post step is formed. In addition, in the second mold portion 2, a pot 20 into which the resin material 50 that is to be molded is poured, a plunger 30 including an auxiliary ram which inserts the resin material 50 into the pot 20 for melting the resin material by applying a pressure after the preparation of the resin material, and a sprue 40 through which the molten resin material 50 is sent into the molding space 10 are provided. Meanwhile, the molding mold 3 according to the present embodiment may be applied to a plunger-type transfer molder including an auxiliary ram as shown in FIG. 1 or may be applied to a pot-type transfer molder not including an auxiliary ram (not shown).

Next, the step of putting the metal member 100 will be described.

As shown in FIG. 1(b), the metal members 100 are put in the molding space 10 of the molding mold 3. Specifically, the metal member 100 is put without being fixed in a portion corresponding to the molding space 10 in a state that the molding mold 3 is opened by moving the first mold portion 1 down. In this manner, it is possible to press the metal member 100 onto the wall surface (molding surface) of any one mold member of the second mold portion 2 and the first mold portion 1 by the fluid pressure of the introduced resin when the molten resin material 50 is introduced into the molding space 10. In the present embodiment, the metal member 100 is pressed onto the wall surface of the first mold portion 1. In such a case, it is possible to prevent burrs from being generated due to an entrance of the resin through insertion margins or a gap between the metal member 100 and the mold wall surface which occurs in a case in which a method of the related art is used.

Here, the metal member 100 is preferably set in a state of contacting with the wall surface (molding surface) of any one of the second mold portion 2 and the first mold portion 1 in advance. In such a case, it is possible to more effectively prevent the molten resin material 50 from entering through a gap between the metal member 100 and the wall surface of the mold member.

The shape of the metal member 100 is a plate shape or a sheet shape. When the metal member has the above-described shape, the fluid pressure of the resin material 50 can be received on the surface of the metal member 100, and thus it is possible to reliably press the metal member 100 onto the wall surface (molding surface) of any one of the second mold portion 2 and the first mold portion 1. In such a case, it is possible to prevent positional deviation of the metal member 100 caused when the resin material 50 is introduced into the molding space 10, and it is possible to more reliably suppress generation of burrs.

The kind of material forming the metal member 100 is not particularly limited and examples thereof include iron, stainless steel, aluminum, aluminum alloys, magnesium, magnesium alloys, copper, and copper alloys from the viewpoint of easy procurement or price thereof. These materials may be used singly or in combination of two or more materials. Among these, the metal member 100 is preferably formed of a material including one or more metals selected from a group consisting of copper, aluminum, and stainless steel. In such a case, it is possible to impart metal characteristics appropriately attributed to the kind of material forming the metal member 100 used to a molded article. For example, in a case in which copper is used as the metal member 100, it is possible to manufacture a molded article to which conductivity is imparted. In a case in which aluminum is used as the metal member 100, it is possible to manufacture a molded article to which electromagnetic shielding properties are imparted. In a case in which stainless steel is used as the metal member 100, it is possible to manufacture a molded article to which corrosion resistance is imparted.

Next, the step of filling the resin material 50 into the molding space 10 (FIG. 1(c)) and the step of curing a thermosetting resin so as to obtain a resin member (FIG. 1(d)) will be described.

In the step of filling the resin material 50 into the molding space 10 according to the present embodiment, first, the resin material 50 that is to be molded is poured into the pot 20 in a state that the molding mold 3 is closed by moving the first mold portion 1 up. The properties of the resin material 50 that is to be molded are not particularly limited, and the resin material may remain in a powder or granular form, may have a cylindrical tablet form, or may be in a half-molten state by being preheated by using a preheater or the like in advance. Next, a pressure is applied to the resin material 50 by inserting the plunger 30 equipped with the auxiliary ram into the pot 20 in order to melt the resin material 50 poured into the pot 20. After that, the molten resin material 50 is introduced into the molding space 10 through the sprue 40. The resin material 50 introduced into the molding space 10 flows in a direction indicated by dotted lines shown in FIG. 1(c). In addition, the metal member 100 is pressed onto the first mold portion 1 by the fluid pressure of the resin material 50, whereby it is possible to form a state that the metal member 100 is apparently fixed onto the wall surface of the mold member. At this time, the melting of the resin material 50 in the pot 20 and the introduction and filling of the molten resin material 50 into the molding space 10 are carried out at the same time. Next, the resin material 50 filled into the molding space 10 is cured by being heated and pressurized (FIG. 1(d)). When the molding mold 3 is opened after the resin material 50 is cured, it is possible to obtain an integrally molded metal-resin article having favorable qualities in which generation of burrs can be suppressed. Meanwhile, the cured substance (cull) of the resin material 50 remaining in the pot 20 and the cured substance in the sprue 40 are separated from the integrally molded metal-resin article by moving the plunger 30 up before the molding mold 3 is opened.

The resin material 50 introduced into the molding space 10 in the present step flows in a single direction without flowing back. Therefore, in a case in which the resin material 50 includes a fiber reinforcing material, it is possible to improve the mechanical strength of a resin member. When the resin material 50 introduced into the molding space 10 flows in a single direction without flowing back, it is possible to control the alignment of the fiber reinforcing material in the cured resin member. According to the method for manufacturing a molded article according to the present embodiment, it is possible to obtain an integrally molded metal-resin article which is uniform from the viewpoint of bending strength and has favorable qualities in the above-described manner.

In addition, in the step of filling the resin material 50 into the molding space 10, it is preferable to introduce the molten resin material 50 into the molding space 10 after degassing the molding space 10. In the above-described manner, it is possible to decrease the possibility of voids being generated in the resin member obtained by means of curing in the post step. Therefore, it is possible to obtain an integrally molded metal-resin article having a more favorable mechanical strength.

Hereinafter, another aspect according to the present embodiment will be described with reference to FIG. 2.

In an example of FIG. 2, the metal member 100 has penetration portions serving as resin flow openings 200. In addition, resin escape portions 300 communicating with the penetration portion are formed in the molding surface onto which the metal member 100 is pressed. When the resin material 50 is introduced into the molding space 10, a portion of the resin material 50 is guided to the resin escape portions 300.

In the present example, recess portions are formed on the outer wall of the first mold portion 1, and the recess portions are used as the resin escape portions 300. The shape of the resin flow opening 200 is a through hole in the present embodiment, but is not particularly limited, and may be a slit shape.

According to the present embodiment, a portion of the molten resin that has been introduced into the molding space 10 can escape to the resin escape portion 300. As a result, it is possible to more effectively suppress the positional deviation of the metal member 100 with respect to the first mold portion 1 and to more accurately suppress generation of burrs.

In the present embodiment, the cured resin member 50 formed in the resin escape portion 300 is removed in a stage in which a molded article is obtained. However, a portion (cured substance) of the resin material 50 that has been introduced into the resin escape portion 300 may be left as a portion of a molded article.

FIG. 3 is a diagram showing another aspect according to the present embodiment. Meanwhile, the molding mold 3 shown in FIG. 3 is a core-type molding mold, and the first mold portion 1, a core 1b which is located at the center of the first mold portion 1 and is fixed to the first mold portion 1, and the second mold portion 2 form the molding space 10 in which the top and the bottom are inverted to those in the examples of FIGS. 1 and 2. As shown in FIG. 3, the metal member 100 is put in a groove (recess portion) between the core 1b and the first mold portion 1 of the molding mold 3, and the molten resin material 50 is introduced into the molding space 10 through the sprue 40. The resin material 50 introduced into the molding space 10 flows in a direction indicated by dotted lines shown in FIG. 3. In addition, the metal member 100 is pressed onto the first mold portion 1 by the fluid pressure of the resin material 50, whereby it is possible to form a state that the metal member 100 is apparently fixed onto the wall surface of the mold member.

In an example of FIG. 3, the constitution of the molding space 10 is different from those in the examples of FIGS. 1 and 2, and consequently, the flow passage of the molten resin is different. As described above, as long as the metal member 100 is configured to be pressed onto the wall surface of the metal member by using the molten resin, it is possible to use a variety of aspects as the constitutions of the molding space 10 and the flow passage of the molten resin.

Hereinafter, the resin material 50 used in the method for manufacturing a molded article according to the present embodiment will be described. The resin material 50 of the present embodiment includes a thermosetting resin.

The thermosetting resin according to the present embodiment is not particularly limited and it is possible to use, for example, a phenol resin, an epoxy resin, a urea resin, a resin having a triazine ring such as a melamine resin, an unsaturated polyester resin, a bismaleimide (BMI) resin, a polyurethane resin, a diallyl phthalate resin, a silicone resin, a resin having a benzoxazine ring, or a cyanate ester resin. In addition, if necessary, two or more of the above-described resins can be used in a combined form. Among these, a phenol resin has favorable fluidity, and thus an obtained product can be used in a wide range of applications, which is preferable.

Among these, specific examples of the phenol resin include novolac-type phenol resins such as a phenol novolac resin, a cresol novolac resin, a bisphenol A novolac resin, and an arylalkylene-type novolac resin; and resol-type phenol resins such as an unmodified resol phenol resin and an oil-modified resol phenol resin modified by such as wood oil, linseed oil, or walnut oil.

These resins can be singly used, two or more resins having different weight-average molecular weights can be jointly used, or one or two or more of the above-described resins and a prepolymer thereof can be jointly used.

In addition, in a case in which the novolac-type phenol resin is used, generally, hexamethylenetetramine is used as a curing agent. In a case in which hexamethylenetetramine is used, the content thereof is not particularly limited, but is preferably equal to or higher than 10 parts by weight and equal to or lower than 30 parts by weight and more preferably equal to or higher than 15 parts by weight and equal to or lower than 20 parts by weight with respect to 100 parts by weight of the novolac-type phenol resin. When the content of hexamethylenetetramine is set in the above-described range, it is possible to provide a favorable mechanical strength and a favorable molding shrinkage amount to a molded article.

In addition, specific examples of the epoxy resin include bisphenol-type epoxy resins such as a bisphenol A-type epoxy resin, a bisphenol F-type epoxy resin, and a bisphenol AD-type epoxy resin; novolac-type epoxy resins such as a phenol novolac-type epoxy resin and a cresol novolac-type epoxy resin; brominated epoxy resins such as a brominated bisphenol A-type epoxy resin and a brominated phenol novolac-type epoxy resin; biphenyl-type epoxy resins; naphthalene-type epoxy resins; and tris(hydroxyphenyl)methane-type epoxy resins. These epoxy resins can be used singly or in a combination of two or more epoxy resins.

Among these, a bisphenol A-type epoxy resin, a phenol novolac-type epoxy resin, and a cresol novolac-type epoxy resin which have a relatively low molecular weight are preferred. When the above-described resins are used, it is possible to provide high fluidity and more favorable workability or moldability during the manufacturing of the molding material. In addition, in terms of heat resistance, a phenol novolac-type epoxy resin, a cresol novolac-type epoxy resin, and a tris(hydroxyphenyl)methane-type epoxy resin are preferred, and a tris(hydroxyphenyl)methane-type epoxy resin is particularly preferred.

In a case in which a tris(hydroxyphenyl)methane-type epoxy resin is used, the number-average molecular weight is not particularly limited, but is preferably in a range of 500 to 2000 and more preferably in a range of 700 to 1400. When the number-average molecular weight is too low, the resin is in a liquid form, and thus there are cases in which it is difficult to produce a molding material, and, when the number-average molecular weight is too high, the melt viscosity of the resin increases, and thus there are cases in which moldability degrades.

In addition, a curing agent may be used together with the epoxy resin. The curing agent of the epoxy resin is not particularly limited, and examples thereof include amine compounds such as aliphatic polyamine, aromatic polyamine, and dicyaminediamide, acid anhydrides such as alicyclic acid anhydrides and aromatic acid anhydrides, polyphenol compounds such as a novolac-type phenol resin, and additionally, imidazole compounds. Among these, a novolac-type phenol resin is preferred in terms of handling workability and the environment.

Particularly, in a case in which a phenol novolac-type epoxy resin, a cresol novolac-type epoxy resin, or a tris(hydroxyphenyl)methane-type epoxy resin is used as the epoxy resin, the curing agent is preferably a novolac-type phenol resin. In such a case, it is possible to improve the heat resistance of a cured substance. Meanwhile, the additive amount of the curing agent is not particularly limited, but the curing agent is preferably blended with the epoxy resin at a theoretical equivalent ratio in a range of 1.0±10% by weight (allowable margin).

In addition, if necessary, a curing promoter can be used together with the curing agent. The curing promoter is not particularly limited, and it is possible to use, for example, an imidazole compound, a tertiary amine compound, an organic phosphorous compound, or the like. The content of the curing promoter is not particularly limited, but is preferably in a range of 0.1 parts by weight to 10 parts by weight and more preferably in a range of 3 parts by weight to 8 parts by weight with respect to 100 parts by weight of the epoxy resin. When the content of the curing promoter is too low, there are cases in which a curing promoting effect is weak, and, when the content of the curing promoter is too high, there are cases in which reactivity becomes too strong and there are cases in which it becomes difficult to produce a molding material.

In addition, the resin material 50 according to the present embodiment may include a fiber reinforcing material. In such a case, it is possible to provide an excellent mechanical strength and excellent stiffness to a resin member itself.

As the fiber reinforcing material, it is possible to use, for example, one or more materials selected from a group consisting of glass fibers, carbon fibers, and plastic fibers. As the plastic fiber, for example, an aramid fiber (aromatic polyamide) is used. In addition, as the fiber reinforcing material, it is also possible to use an inorganic fiber such a basalt fiber or a metal fiber such a stainless fiber.

In order to improve the adhesiveness to a parent material resin, the fiber reinforcing material may be subjected to a surface treatment by using a silane coupling agent. As the silane coupling agent, an amine silane coupling agent, an epoxy silane coupling agent, a vinyl silane coupling agent, or the like can be used.

Among these materials, when a carbon fiber or an aramid fiber is used, it is possible to further increase the mechanical strength of a molded article. Among these, when a carbon fiber is used, it is possible to further improve the abrasion resistance at a high load. In addition, from the viewpoint of reducing the weight of a molded article, a plastic fiber such as an aramid fiber is preferably used.

In addition, from the viewpoint of improving the mechanical strength of a molded article, a fiber base material such as a glass fiber or a carbon fiber is preferably used as the fiber reinforcing material. Generally, when a fiber base material is used, there is a disadvantage in that the strength of an obtained molded article varies depending on the alignment direction of the fiber base material. According to the present embodiment, a molded article is produced by integrating a metal member and a resin member, and thus, in places reinforced with the metal member, the above-described disadvantage can be solved. Therefore, in a case in which a fiber base material is used as the fiber reinforcing material in the present embodiment, it is possible to obtain an integrally molded metal-resin article having both the intrinsic characteristics of a fiber base material and the strength characteristics of a metal member.

The amount of the fiber reinforcing material in the resin material 50 according to the present embodiment is, for example, equal to or higher than 10% by volume, preferably equal to or higher than 20% by volume, and more preferably equal to or higher than 25% by volume with respect to the total amount of the resin material 50 from the viewpoint of improving the mechanical strength of an obtained resin member. Meanwhile, the upper limit value of the content of the fiber reinforcing material with respect to the total amount of the resin material 50 is not particularly limited, but may be set to, for example, equal to or lower than 80% by volume.

The resin material 50 according to the present embodiment may include a filler other than the fiber reinforcing material. The filler that can be used in the present embodiment may be an inorganic filler or an organic filler.

As the inorganic filler, more specifically, one or more fillers selected from calcium carbonate, clay, silica, mica, talc, Wolastonite, glass beads, milled carbon, graphite, and the like can be used.

In addition, as the organic filler, it is possible to use polyvinyl butyral, acrylonitrile butadiene rubber, pulp, wood powder, or the like. Among these, from the viewpoint of further strengthening the effect of improving the toughness of a molded article, acrylonitrile butadiene rubber is preferred.

The content of the inorganic filler in the resin material 50 is not particularly limited and can be appropriately determined depending on applications.

Meanwhile, to the resin material 50 according to the present embodiment, additives such as a mold release agent, a curing aid, and a pigment can also be added in addition to the above-described components as long as the object of the present invention is not impaired.

### <Integrally molded metal-resin article>

An integrally molded metal-resin article obtained using the above-described method for manufacturing a molded article has a high quality which is obtained by solving a disadvantage of generation of burrs caused by the entrance of the resin through a gap between the metal member and the mold member or insertion margins which occurs in a case in which a method of the related art is employed. In addition, the integrally molded metal-resin article according to the present embodiment has no level differences in a joint place between the metal member 100 and the resin member in which generation of burrs is suppressed and thus has an excellent balance between the mechanical strength and stiffness and can be used for a long period of time.

Hitherto, the embodiments of the present invention have been described, but these embodiments are examples of the present invention, and it is possible to employ a variety of constitutions other than what has been described above.

For example, in the method for manufacturing a molded article according to the present embodiment, it is also possible to use a molding mold 3 of FIG. 4. Specifically, FIG. 4 is a diagram for describing a modification example of the method for manufacturing a molded article according to the present embodiment and is a diagram for describing a step of filling the resin material 50 into the molding space 10 in a case in which an injection molding mold is used. Meanwhile, similar to the molding molds 3 of FIGS. 1 to 3, the molding mold 3 of FIG. 4 also includes the first mold portion 1 and the second mold portion 2.

As shown in FIG. 4, the method for manufacturing a molded article according to the present embodiment is also applicable even in a case in which an injection molding mold is used. As described above, even in the case of injection molding, a variety of aspects can be used as long as the metal member 100 is configured to be pressed onto the wall surface of the metal member by using the molten resin material 50 that has been introduced into the molding space 10 through the sprue 40.

### [Examples]

A molded article was produced by means of transfer molding by using a molding mold having the structure shown in FIG. 2. Meanwhile, a metal member was put in a molding space as shown in FIG. 2.

### (1) Resin material

As a resin material, a material including a phenol novolac resin, hexamethylenetetramine, and a glass fiber was used. The main constitutional raw materials of the resin material will be described below.
· Parent material resin: PR-51305 manufactured by Sumitomo Bakelite Co., Ltd. (phenol novolac resin)
· Curing agent: hexamethylenetetramine
· Curing aid: magnesium oxide
· Mold release agent: calcium stearate
· Coloring agent: carbon black
· Fiber reinforcing material (1): glass fiber (CUTFIBER (E glass) manufactured by Nitto Boseki Co., Ltd.), average fiber diameter: 11 µm
· Fiber reinforcing material (2): carbon fiber (HTA-03-0W manufactured by Toho Tenax Co., Ltd.), average fiber diameter: 7 µm

### (2) Metal member

A metal plate made of stainless steel was used. The dimensions of the metal plate were 100 mm (vertical)×150 mm (horizontal) ×1 mm (thickness). A through hole having a diameter of 2.5 mm was provided in the metal member.

After transfer molding was carried out by using a molding mold having the structure shown in FIG. 2, a portion formed in a resin escape portion was removed, thereby obtaining a molded article.

The obtained molded article was visually observed, and consequently, it was confirmed that the metal member and the resin member were tightly adhered together at the interface, there was no peeling in the interface, and no voids were generated in the resin member. The obtained molded article had a sufficient strength.

The present application claims priority on the basis of Japanese Patent Application No. 2013-188492 filed on September 11, 2013, the content of which is incorporated herein by reference.

## Claims

1. A method for manufacturing a molded article obtained by integrating a plate-shaped or sheet-shaped metal member and a resin member, comprising:
a step of putting the metal member in a molding space by using a molding mold which includes a first mold portion and a second mold portion and has the molding space formed of these mold members;
a step of introducing a resin material including a thermosetting resin into the molding space in the molding mold and filling the resin material into the molding space while pressing the metal member onto any one molding surface of the first mold portion and the second mold portion by a fluid pressure of the resin material; and
a step of curing the introduced resin material so as to obtain the molded article.

2. The method for manufacturing a molded article according to Claim 1,
wherein, in the step of putting the metal member in the molding space, the metal member is set in a state that the metal member contacts with any one molding surface of the first mold portion and the second mold portion.

3. The method for manufacturing a molded article according to Claim 1 or 2,
wherein the thermosetting resin is a phenol resin.

4. The method for manufacturing a molded article according to any one of Claims 1 to 3,
wherein the step of filling the resin material into the molding space includes
a step of degassing the molding space, and
a step of introducing the resin material into the degassed molding space.

5. The method for manufacturing a molded article according to any one of Claims 1 to 4,
wherein the metal member has a penetration portion serving as a resin flow opening,
a resin escape portion communicating with the penetration portion is formed in the molding surface onto which the metal member is pressed, and
when the resin material is introduced into the molding space, a portion of the resin material is guided to the resin escape portion.

6. The method for manufacturing a molded article according to Claim 5,
wherein, in the step of curing the resin material so as to obtain the molded article, the cured resin material formed in the resin escape portion is removed.

7. The method for manufacturing a molded article according to any one of Claims 1 to 6,
wherein the metal member is formed of a material including one or more selected from a group consisting of copper, aluminum, and stainless steel.

8. The method for manufacturing a molded article according to any one of Claims 1 to 7,
wherein the molding mold is a transfer molding mold.

9. An integrally molded metal-resin article obtained using the method for manufacturing a molded article according to any one of Claims 1 to 8.
